**Europäisches Patentamt**

(19) **European Patent Office**

**Office européen des brevets**

(11) Veröffentlichungsnummer: **0 100 027**
**B1**

(12) # EUROPÄISCHE PATENTSCHRIFT

(45) Veröffentlichungstag der Patentschrift:
**05.11.86**

(21) Anmeldenummer: **83106887.9**

(22) Anmeldetag: **13.07.83**

(51) Int. Cl.⁴: **F 16 K  15/14,** F 16 K  37/00

---

(54) **Ventil.**

---

(30) Priorität: **13.07.82  DE 3226216**

(43) Veröffentlichungstag der Anmeldung:
**08.02.84 Patentblatt 84/6**

(45) Bekanntmachung des Hinweises auf die Patenterteilung:
**05.11.86 Patentblatt 86/45**

(84) Benannte Vertragsstaaten:
**BE CH DE FR LI NL**

(56) Entgegenhaltungen:
**DE-A-1 800 467**
**DE-C-362 324**
**GB-A-19 874**
**GB-A-1 565 806**
**US-A-3 394 844**
**US-A-3 901 265**

(73) Patentinhaber: **Linde Aktiengesellschaft, Abraham-Lincoln- Strasse 21, D-6200 Wiesbaden (DE)**

(72) Erfinder: **Hetzer, Friedrich, Dipl.- Ing.,
Seitnerstrasse 47, D-8023 Pullach (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft ein Ventil mit einer Abblaseöffnung, die mit einer verformbaren Hülle versehen ist. Derartige Ventile werden überall dort eingesetzt, wo der Druck von einem geschlossenen Raum, wie beispielsweise einem Tank oder einer Rohrleitung, in die umgebende Atmosphäre entspannt werden soll. Die Bezeichnung Ventil soll im folgenden sämtliche Armaturen umfassen, die durch Steuerung von Hand, durch Regelung oder selbsttätig, beispielsweise bei Überschreiten einer vorgegebenen Druckdifferenz, zum Beispiel Gas aus einem Gasraum an die Umgebung abblasen. Zu den genannten Ventilen zählen z.B. Sicherheitsventile und Druckentlastungsventile. Daneben bezieht sich die Erfindung auch auf Ventile für Flüssigkeiten und auf Ventile für staubförmige Medien.

Die beschriebenen Ventile werden beispielsweise als Kaltgasarmaturen eingesetzt und dienen z.B. zum Abblasen von Gasen, deren Temperatur unterhalb der Umgebungstemperatur liegt, beispielsweise an Speicherbehältern und Rohrleitungen für tiefsiedende verflüssigte Gase. Hierbei kommt es vor, daß sich bei Ansprechen des Gasventils das Ventil allein durch das austretende tiefsiedende Gas so stark abkühlt, daß die in der Umgebung enthaltene Luftfeuchtigkeit am Ventilgehäuse, am Ventilsitz oder an der Abblaseöffnung ausfriert. Dabei besteht die Gefahr, daß die Funktion des Gasventils gestört wird. Überdies sind die funktionswichtigen Teile des Gasventils aufgrund ständiger Tau- und Kondenswasserbildung vermehrten Korrosionsangriffen ausgesetzt.

Aufgrund der Entspannung des Gases beim Abblasen können auch bei Gasen mit Umgebungstemperatur am Gasventil Temperaturen auftreten, bei denen Luftfeuchtigkeit kondensiert.

Unabhängig von den durch Abkühlung bedingten Effekten werden die funktionswichtigen Teile des Gasventils in vielen Fällen durch korrosive Luftanteile (Industrieluft, salzhaltige Seeluft) bedroht. Aus diesen Gründen ist die Abblaseöffnung eines derartigen Ventils mit einer Hülle versehen, die verhindert, daß Luftfeuchtigkeit sowie korrosive Bestandteile der Luft an die Abblaseöffnung gelangen, so daß diese nicht mehr zufrieren bzw. korrodieren kann.

Derartige Hüllen in Verbindung mit Ventilen sind im Prinzip bereits vorbekannt. So zeigt die GB-A- 1 565 806 ein Schwimmerventil für eine Zisterne. Bei geöffnetem Ventil fließt Wasser aus einer Zuführungsöffnung nach oben und anschließend durch ein nach unten gekrümmtes Rohr nach unten. In dem Rohr befindet sich eine Hülse, die an der Auslaßöffnung befestigt ist und die am gegenüberliegenden Ende freibeweglich im Rohr ist. Am höchsten Punkt des Rohres befindet sich eine Lufteinlaßöffnung. Solange Wasser aus dem Ventil strömt, ist die Hülle in dem Rohr aufgebläht und liegt dicht an der Rohrinnenwand an. Das Wasser durchströmt die Hülle und gelangt durch ein Rohrverlängerungsstück in die Zisterne. Sobald der Druck an der Auslaßöffnung zusammenbricht, fällt die Hülle in sich zusammen und Luft gelangt in den Zwischenraum zwischen dem Rohr und der Hülle. Auf diese Weise wird verhindert, daß Wasser aus der Zisterne in das Ventil zurückströmt.

Die US-A- 3,901,285 zeigt ebenfalls ein Schwimmerventil in einer Zisterne, das eine Flüssigkeitsströmung in nur einer Richtung zuläßt. Ein Zurückfließen von Wasser aus der Zisterne in das Ventil wird durch eine wasserundurchlässige Hülle verhindert. Die Hülle ist mit einem Ende am Ende eines Auslaßrohres für das Wasser befestigt, während das andere Ende die Zisterne reicht. Solange Wasser aus dem Ventil ausströmt, fließt es durch die Hülle in die Zisterne. Hört der Wasserzustrom auf, fällt die Hülle in sich zusammen.

Bei beiden Schwimmerventilen ist die Hülle jeweils fest mit der Auslaßöffnung des Ventils verbunden.

Bei Ventilen der eingangs geannten Art ist es aus Sicherheitsgründen häufig unerläßlich, daß das Öffnen des Ventils bemerkt wird.

Der Erfindung liegt daher die Aufgabe zugrunde, ein Ventil der eingangs genannten Art zu schaffen, das sich durch hohe Betriebssicherheit und geringe Korrosionsanfälligkeit auszeichnet, und daß ein Ansprechen des Ventils anzeigt.

Diese Aufgabe wird erfindungsgemäß dadurch gelöst, daß die Hülle selbsttätig lösbar an der Abblaseöffnung befestigt ist.

Durch die vorliegende Erfindung ist eine einfache Anzeigemöglichkeit für das Öffnen des Ventils geschaffen worden. Die Hülle wird bei einem bestimmten Druck an der Abblaseöffnung von der Öffnung weggerissen. Je nachdem, ob sich die Hülle an der Abblaseöffnung befindet oder von ihr weggerissen ist, hat das Ventil angesprochen oder nicht. Der Druckwert, der für das Abreißen erforderlich ist, kann innerhalb weiter Grenzen durch die Wahl des Materials und der Größe der Hülle sowie den Festhaltegriffen zwischen Hülle und Abblaseöffnung variiert werden. Der Druck, bei dem die Hülle weggerissen wird, liegt unterhalb desjenigen Druckes, bei dem die Hülle zerreißt.

Bei einer bevorzugten Weiterbildung des Erfindungsgegenstandes ist die Hülle mit einem Splitterlack überzogen.

Der Splitterlack ist ein sehr hart trocknender spröder Lack. Der Lacküberzug stellt ein zusätzliches, feineres Anzeigeinstrument dafür da, ob das Ventil angesprochen hat. Der Splitterlack, der einen starren Überzug über der verformbaren Hülle darstellt, wird bereits bei einer relativ geringfügigen aus der Auslaßöffnung des Ventils austretenden Fluidmenge Sprünge bekommen oder sogar abblättern, so daß auch kleine Leckfluidmengen nachgewiesen werden können.

Selbstverständlich ist die Anzeige mittels Splitterlack nur dann sinnvoll, wenn der Druck, bei dem der Lack zu splittern beginnt, deutlich unterhalb desjenigen Druckes liegt, bei dem die Hülle von der Öffnung weggerissen wird.

Gemäß weiteren bevorzugten Ausführungsformen des Erfindungsgegenstandes ist die Hülle als Ballon oder als abgeflachter Schlauch, dessen abgeflachtes Ende durch inneren Überdruck öffenbar ist, ausgebildet.

Bei einer ballonförmigen Hülle ist der Ballon zweckmäßigerweise so bemessen, daß er die zu erwartende Gasmenge aufnehmen kann. Übersteigt der Innendruck in der Hülle einen bestimmten vorgegebenen Wert, so rutscht die Hülle von der Abblaseöffnung ab.

Bei einer als abgeflachter Schlauch ausgebildeten Hülle ist das eine Ende des Schlauches über die Abblaseöffnung geschoben, während der restliche Teil des Schlauches zusammengequetscht ist, so daß keine Feuchtigkeit und korrosive Bestandteile aus der Luft in das Ventil gelangen können. Andererseits kann ein kleiner Leckgasstrom, der möglicherweise ständig aus dem Gasventil entweicht, durch die Hülle austreten, da deren abgeflachtes Ende durch inneren Überdruck öffenbar ist. Die Hülle wirkt gleichsam wie ein Ventil nach dem Ventil, das in einer Richtung (von der Umgebung nach innen) dicht und in der anderen Richtung (von innen zur Umgebung) durchlässig ist. Der Schlauch ist mit Vorteil aus Kunststoff gefertigt und behält, solange das Gasventil nicht anspricht, permanent seine zusammengedrückte Form. Ein kleiner Leckgasstrom kann, wie erwähnt, dennoch aus dem Gasventil entweichen. Die Hülle bläht sich erst dann auf, wenn infolge eines Ansprechens des Gasventils plötzlich eine relativ zur Leckgasrate große Gasmenge aus dem Abblasestutzen austritt. Auch hier rutscht die Hülle, sobald der Innendruck in der Hülle einen bestimmten vorgegebenen Wert übersteigt, von der Abblaseöffnung ab.

Die Erfindung sowie weitere Einzelheiten der Erfindung werden anhand von schematisch dargestellten Ausführungsbeispielen näher erläutert.

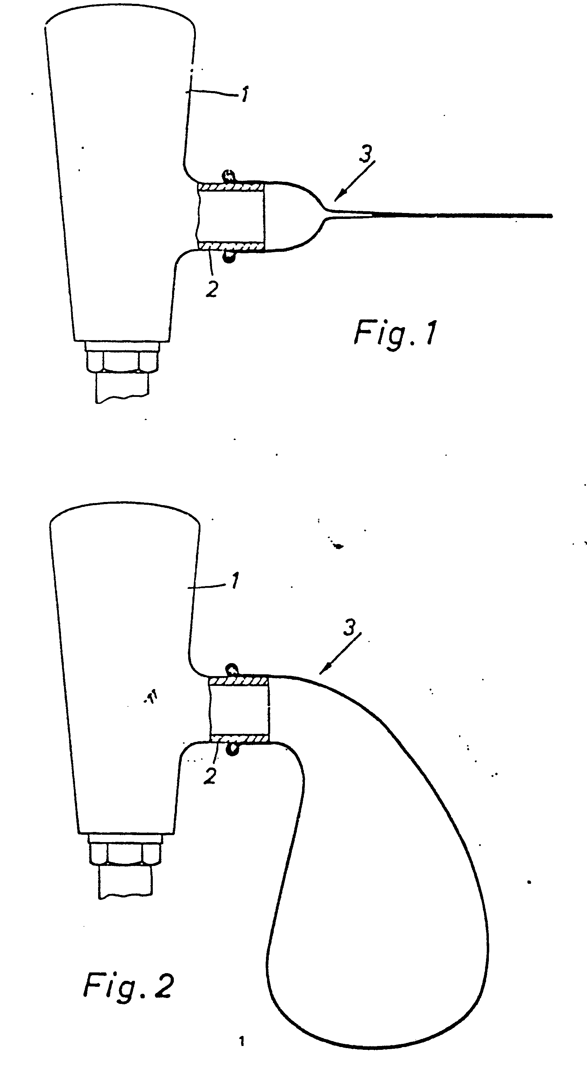

Hierbei zeigen die Fig. 1 und 2 zweierlei Ausführungsformen des Erfindungsgegenstandes.

In den Fig. 1 und 2 ist ein Gasventil 1 dargestellt, das beispielsweise an einem Tank für ein tiefkaltes verflüssigtes Gas als Sicherheitsventil eingesetzt ist. Das Gasventil 1 weist einen Rohrstutzen 2 auf, über den das aus dem Tank abzublasende Gas entweicht. Erfindungsgemäß ist die Abblaseöffnung mit einer verformbaren Hülle 3 versehen, um zu verhindern, daß Feuchtigkeit und korrosive Luftbestandteile durch den Rohrstutzen 2 an die funktionswesentlichen Teile des Gasventils 1 gelangen.

Gemäß Fig. 1 ist die Hülle 3 als elastischer Schlauch ausgebildet, dessen eines Ende über den Rohrstutzen 2 geschoben ist, während der restliche Teil des Schlauches permanent zusammengedrückt ist. Der Schlauch ist an seinem abgeflachten Ende zur Umgebung hin öffenbar und gibt, sofern ein kleiner Leckgasstrom aus dem Gasventil 1 austritt, einen kleinen Leckspalt frei, durch den das Leckgas in die Umgebung entweichen kann. Andererseits ist der Schlauch in umgekehrter Richtung, also von der Umgebung zum Gasventil 1 hin, dicht.

Der Schlauch ist so ausgebildet, daß er sich aufbläht, wenn infolge eines Ansprechens des Gasventils 1 plötzlich eine große Gasmenge aus dem Rohrstutzen 2 austritt.

Gemäß Fig. 2 ist die Hülle 3 ballonförmig ausgebildet. Der Ballon kann dabei entweder geschlossen, wie in der Fig. dargestellt, oder mit winzigen Öffnungen versehen sein, die zwar ein Eindringen von Luft aus der Umgebung ins Innere des Gasventils 1 verhindern, die jedoch, wenn sich der Ballon, beispielsweise infolge eines Leckgasstroms, aufbläht, ein Ausströmen von Gas in die Umgebung ermöglichen.

Zur Anzeige, ob das Gasventil 1 angesprochen wird, kann in beiden Ausführungsbeispielen die Hülle 3 mit einem Splitterlack überzogen sein, der abplatzt, sobald sich die Hülle einmal aufgebläht hat.

Die Hülle 3 ist in beiden Fällen über den Rohrstutzen 2 beschoben und dort lösbar gehalten, d.h. wenn der Innendruck in der Hülle 3 einen bestimmten vorgegebenen Wert übersteigt, rutscht die Hülle von dem Rohrstutzen 2 ab.

## Patentansprüche

1. Ventil mit einer Abblaseöffnung, die mit einer verformbaren Hülle versehen ist, dadurch gekennzeichnet, daß die Hülle (3) selbsttätig lösbar an der Abblaseöffnung befestigt ist.

2. Ventil nach Anspruch 1, dadurch gekennzeichnet, daß die Hülle (3) mit einem Splitterlack überzogen ist.

3. Ventil nach Anspruch 1 oder 2, dadurch gekennzeichnet, daß die Hülle (3) als Ballon ausgebildet ist.

4. Ventil nach Anspruch 1 oder 2, dadurch gekennzeichnet, daß die Hülle (3) als abgeflachter Schlauch ausgebildet ist, dessen abgeflachtes Ende durch inneren Überdruck öffenbar ist.

## Claims

1. A valve comprising an exhaust opening which is provided with a deformable covering, characterised in that the covering (3) is secured to the exhaust aperture so as to be automatically detachable.

2. A valve as claimed in Claim 1, characterised in that the covering (3) is coated with a shattering lacquer.

3. A valve as claimed in Claim 1 or Claim 2, characterised in that the covering (3) is in the form of a balloon.

4. A valve as claimed in Claim 1 or Claim 2, characterised in that the covering (3) is in the form of a flattened tube, the flattened end of which can be opened by internal excess pressure.

## Revendications

1.- Soupape comportant un orifice de décharge qui est pourvu d'une enveloppe déformable, caractérisée en ce que l'enveloppe (3) est fixée de façon automatiquement séparable sur l'orifice de décharge.

2.- Soupape selon la revendication 1, caractérisée en ce que l'enveloppe (3) est revêtue d'une laque à fragmentation.

3.- Soupape selon la revendication 1 ou 2, caractérisée en ce que l'enveloppe (3) est agencée comme un ballon.

4.- Soupape selon la revendication 1 ou 2, caractérisée en ce que l'enveloppe (3) est agencée comme un tuyau souple aplati dont l'extrémité aplatie peut être ouverte par une surpression interne.

0 100 027

Fig. 1

Fig. 2